# EUROPEAN PATENT SPECIFICATION

(11) **EP 3 297 149 B1**
(45) Date of publication and mention of the grant of the patent: **20.03.2019**
(21) Application number: 16189081.9
(22) Date of filing: 15.09.2016
(51) Int. Cl.: H02M 7/49, H02J 3/36, H02M 7/493, H02M 7/757, H02M 7/483

(54) **PARALLEL-CONNECTED CONVERTER ASSEMBLY**
PARALLELGESCHALTETE WANDLERANORDNUNG
ENSEMBLE CONVERTISSEURS CONNECTÉS EN PARALLÈLE

(43) Date of publication of application: 21.03.2018
(73) Proprietor: General Electric Technology GmbH, 5400 Baden (CH)
(72) Inventor: TRAINER, David Reginald, Derby, Derbyshire DE24 0AQ (GB); GINNAREDDY, Rajseker, Stafford, Staffordshire ST17 4FG (GB); JASIM, Omar Fadhel, Nottingham, Nottinghamshire NG8 2RW (GB); BARKER, Carl David, Stone, Staffordshire ST15 0LN (GB); MORENO MUÑOZ, Francisco Jose, 31780 Bera Navarra (ES); NOLAN, Andrew, Stafford, Staffordshire ST17 0DB (GB)
(74) Representative: Fischer, Michael Maria

(56) References cited:
- CH-A- 460 929
- US-A- 4 172 991
- US-A1- 2013 128 629
- US-A1- 2013 279 211

## Description

This invention relates to parallel-connected converter assemblies, preferably for use in high voltage direct current transmission and reactive power compensation.

In power transmission networks alternating current (AC) power is typically converted to direct current (DC) power for transmission via overhead lines and/or under-sea cables. This conversion removes the need to compensate for the AC capacitive load effects imposed by the transmission line or cable and reduces the cost per kilometre of the lines and/or cables, and thus becomes cost-effective when power needs to be transmitted over a long distance.

Converters are used to convert between AC power and DC power.

US 2013/279211 A1 discloses a power electronic converter for use in high voltage direct current power transmission and reactive power compensation.

US 4172991 A discloses an AC current control system for an AC power supply device for feeding a load.

US 2013/128629 A1 discloses a hybrid 2-level and multilevel HVDC converter.

CH 460929 A discloses how a sinusoidal current can be composed of partial half wave currents by activating and deactivating inverter parts.

While the invention is defined in independent claim 1, further aspects of the invention are set forth in the dependent claims, the drawings and the following description.

According to a first aspect of the invention, there is provided a parallel-connected converter assembly comprising:
first and second converters, each converter including first and second DC terminals, each converter including at least one converter limb extending between the corresponding DC terminals, each converter limb including first and second limb portions separated by an AC terminal, each AC terminal connectable in use to an AC voltage, each limb portion including at least one director switch connected between the AC terminal and a respective one of the first and second DC terminals, the director switches of the first and second limb portions operable to switch the respective limb portions into and out of circuit between the respective DC terminal and the AC terminal;
first and second DC transmission media respectively including first and second DC network terminals connectable in use to a DC network, the first DC transmission medium interconnecting the first DC terminals of the converters, the second DC transmission medium interconnecting the second DC terminals of the converters; and
a controller programmed to selectively control the switching of the director switches of each converter limb to switch both of the corresponding limb portions into circuit concurrently to form a current conduction path in the corresponding converter, the respective current conduction path configured to carry a current for presentation to the DC network terminals, wherein the controller is further programmed to selectively control the switching of the director switches so that, in an operating cycle of the parallel-connected converter assembly, the parallel-connected converter assembly switches between:
   (i) a first mode in which the respective current conduction path is formed in the first converter and the respective current conduction path is not formed in the second converter; and
   (ii) a second mode in which the respective current conduction path is formed in the second converter and the respective current conduction path is not formed in the first converter;
wherein the AC terminals of the converters are connected to the same AC voltage, and the controller is further programmed to selectively control the switching of the director switches so that the duration during which the respective current conduction path is formed in the first converter is asymmetrical or substantially asymmetrical about a zero crossing of the first AC voltage and so that the duration during which the respective current conduction path is formed in the second converter is asymmetrical or substantially asymmetrical about a zero crossing of the second AC voltage.

In use, the parallel-connected converter assembly is operated to transfer power between AC and DC networks. When compared to a single converter, a parallel-connected converter assembly is compatible with higher current ratings at higher power ratings (e.g. 1000MW or higher). Meanwhile the respective current conduction path may be formed in the respective converter during the operation of the parallel-connected converter assembly to transfer power between the AC and DC networks, without significantly affecting the overall power transfer between the AC and DC networks.

The formation of the current conduction path in a given converter permits the flow of a current between the DC network terminals via the converter limb with the limb portions switched into circuit concurrently. In use, the current may be employed to modify the power characteristics of the respective converter and/or the DC network. This advantageously obviates the need for separate hardware to modify the power characteristics of the respective converter and/or the DC network, thus providing savings in terms of cost, weight and footprint of the parallel-connected converter assembly.

The ability of the parallel-connected converter assembly to form the respective current conduction path in the respective converter is further complemented by the ability of the parallel-connected converter assembly to switch between the first and second modes, which enables the parallel-connected converter assembly to achieve a high power rating with fewer components, improved efficiency and reduced insulation voltage stress when compared to a parallel-connected converter assembly without the ability to switch between the first and second modes.

In embodiments of the invention, the respective current conduction path may be configured to carry an alternating current for presentation to the DC network terminals.

Alternating current can, for example, be used to filter ripple in the DC network. The alternating current in the respective current conduction path may, for example, be shaped to minimise or cancel a ripple current in the DC network. This allows the respective converter to act as an active DC filter, thus reducing or obviating the need to use separate passive and/or active filtering hardware.

In a preferred embodiment of the invention, the first and second converters may be first and second alternate arm converters respectively. In each alternate arm converter, each limb portion may include the or each director switch connected in series with a chain-link converter between the AC terminal and a respective one of the first and second DC terminals, the chain-link converters of each converter limb may be operable to generate an AC voltage waveform at the corresponding AC terminal, and the director switches of the first and second limb portions may be operable to switch the respective chain-link converters into and out of circuit between the respective DC terminal and the AC terminal.

During the operation of a given alternate arm converter to transfer power between the AC and DC networks, the flow of current in each converter typically alternates between the limb portions over a duty cycle such that one limb portion is configured in a conducting state while the other limb portion is configured in a non-conducting state. The controller may therefore be programmed to selectively control the switching of the director switches of each converter limb to switch both of the corresponding limb portions into circuit concurrently to form the current conduction path in the corresponding converter during a transition between the conducting and non-conducting states of each limb portion.

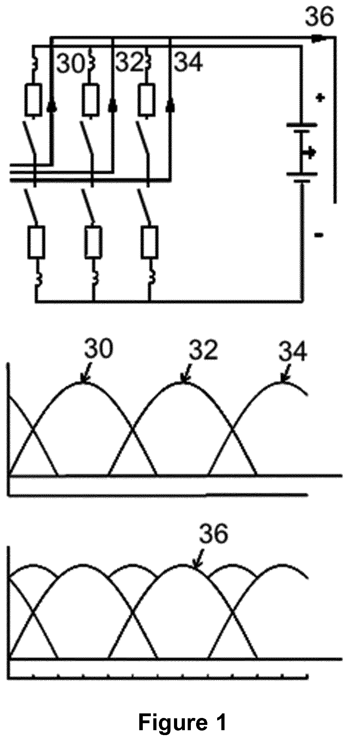

The ability of the parallel-connected converter assembly to form the respective current conduction path is particularly useful for a parallel-connected alternate arm converter assembly. This is due to the natural characteristic of an alternate arm converter to supply converter limb currents 30, 32, 34 that sum to a direct current 36 with a high level of 6^{th} harmonic ripple, as shown in Figure 1. Such harmonic ripple can be reduced or cancelled using the current flowing in the respective current conduction path.

In addition the chain-link converters of the limb portions switched into circuit concurrently may be operated to not only inject a current into the respective current conduction path for presentation to the DC network terminals, but also to actively control the properties of the current into the respective current conduction path.

In further embodiments of the invention, the controller may be further programmed to selectively control the switching of the director switches so that the parallel-connected converter assembly alternates between the first and second modes in the operating cycle of the parallel-connected converter assembly. This enables the parallel-connected converter assembly to switch repeatedly between the first and second modes in its operating cycle.

In still further embodiments of the invention, the controller may be further programmed to selectively control the switching of the director switches so that the parallel-connected converter assembly is in either of the first and second modes at any given time in the operating cycle of the parallel-connected converter assembly.

Such configuration of the parallel-connected converter assembly permits the formation of a continuous current path between the first and second DC network terminals and thereby enables continuous modification of the power characteristics of the DC network throughout the operating cycle of the DC network. For example, when the respective current conduction path is configured to carry an alternating current for presentation to the DC network terminals, it becomes possible to provide a continuously flowing alternating current between the DC network terminals so as to completely cancel ripple in the DC network throughout the operating cycle of the parallel-connected converter assembly.

Optionally the controller may be further programmed to selectively control the switching of the director switches so that the parallel-connected converter assembly is in a third mode in which the respective current conduction paths are respectively formed in the first and second converters during a transition period between the first and second modes.

The provision of the third mode prevents discontinuity when the parallel-connected converter assembly switches between the first and second modes.

When either or both of the converters includes a plurality of converter limbs, the controller may be further programmed to selectively control the switching of the director switches of each of the plurality of converter limbs to switch both of the corresponding limb portions into circuit concurrently to form a respective current conduction path in the corresponding converter, and the controller may be further programmed to selectively control the switching of the director switches of the plurality of converter limbs to form the respective current conduction paths at respective different times in the operating cycle of the parallel-connected converter assembly.

The formation of different current conduction paths at different times with respect to a given converter is compatible with the multi-phase operation of the plurality of converter limbs to interconnect a multi-phase AC voltage and a DC voltage.

When the AC terminals of the converters are connected to the same AC voltage, the controller may be further programmed to selectively control the switching of the director switches so that the duration during which the respective current conduction path is formed in the first converter is asymmetrical or substantially asymmetrical about a zero crossing of the first AC voltage and so that the duration during which the respective current conduction path is formed in the second converter is asymmetrical or substantially asymmetrical about a zero crossing of the second AC voltage.

This allows for an asymmetrical configuration of the limb portions with reductions in the required ratings of the limb portions.

The parallel-connected converter assembly of the invention may further include at least one reactor connected in the DC transmission media between the converters.

The provision of one or more such reactors not only provides current control for the DC transmission media between the converters, but also permits the reduction or omission of reactors in the limb portions of the converters as a result of the ability of the parallel-connected converter assembly to switch between the first and second modes.

In embodiments of the invention, the or each AC terminal of the first converter may be connected to a first AC voltage, the or each AC terminal of the second converter may be connected to a second AC voltage, and the first and second AC voltages may be configured to be phase shifted relative to each other.

Configuring the converters to be supplied by respective AC voltages with a phase shift therebetween provides an additional way of modifying the power characteristics of the DC network that does not require any control action.

The first and second AC voltages may be configured to be phase shifted relative to each other so that the duration during which the respective current conduction path is formed in the first converter is symmetrical or substantially symmetrical about a zero crossing of the first AC voltage and so that the duration during which the respective current conduction path is formed in the second converter is symmetrical or substantially symmetrical about a zero crossing of the second AC voltage.

This allows for a symmetrical configuration of the limb portions with further reductions in the required ratings of the limb portions.

The first and second AC voltages may be configured to be phase shifted relative to each other so that, in use, a harmonic current component appearing at a DC side of the first converter is in anti-phase with a harmonic current component appearing at a DC side of the second converter such that the harmonic current components cancel each other out at the DC network terminals. This removes or reduces the burden on the converters to provide the DC network with active filtering, which makes it easier to optimise both converters in terms of their control and configuration.

There are a number of different ways of phase shifting the first and second AC voltage relative to each other, examples of which are specified as follows.

When the first and second AC voltages are operatively linked to an AC network voltage, the parallel-connected converter assembly may further include a transformer assembly configured to connect the AC network voltage to either or both of the first and second AC voltages, and the transformer assembly may be configured so that the first and second AC voltages are phase shifted relative to each other.

The provision of the transformer assembly provides a way of phase shifting the first and second AC voltages without having to resort to using control action.

The transformer assembly may be configured in a number of different arrangements in order so that the first and second AC voltages are phase shifted relative to each other.

The transformer assembly may be configured in a first arrangement in which a primary winding of the transformer assembly is connected to the AC network voltage, a star-connected secondary winding of the transformer assembly is connected to one of the first and second AC voltages, and a delta-connected secondary winding of the transformer assembly is connected to the other of the first and second AC voltages.

The provision of the star-connected and delta-connected secondary windings provide a reliable means of phase shifting the first and second AC voltage relative to each other while providing isolation between the AC network voltage and both of the first and second AC voltages.

The transformer assembly may be configured in a second arrangement in which an autotransformer of the transformer assembly is configured to connect the AC network voltage to both of the first and second AC voltages, and the autotransformer is configured so that the first and second AC voltages are phase shifted relative to each other.

The provision of the autotransformer advantageously allows the transformer assembly to have a lower MVA rating and be smaller and lighter than a transformer assembly based on an isolation transformer.

The transformer assembly may be configured in a third arrangement in which the transformer assembly is configured to connect the AC network voltage to only one of the first and second AC voltages, a primary winding of the transformer assembly is connected to the AC network voltage, a secondary winding of the transformer assembly is connected to one of the first and second AC voltages, and the other of the first and second AC voltages is directly connected to the AC network voltage.

Such configuration of the transformer assembly permits a reduction in the number of components and the MVA rating of the transformer assembly, since there is no requirement for the transformer assembly to connect the AC network voltage to the other of the first and second AC voltages.

It is envisaged that the other of the first and second AC voltages may be connected to the AC network voltage via one or more reactors.

The controller may be programmed to operate each converter so as to generate a 5^{th} harmonic current component and/or a 7^{th} harmonic current component at an AC side of each converter when the first and second AC voltages are phase shifted relative to each other. This provides each converter with further control over their power characteristics.

In further embodiments of the invention, the controller may be programmed to operate the limb portions of each converter to selectively inject one or more zero phase sequence triplen harmonic components into an AC voltage waveform at an AC side of each converter.

The ability of the parallel-connected transformer assembly to switch between the first and second modes permits a reduction in the amount of triplen harmonic voltage modulation of the AC voltage waveform in order to optimise the number of limb portion components and the insulation class and clearance distance of any associated transformer.

In addition, when the converters are supplied by respective AC voltages with a phase shift therebetween, it becomes possible to apply further reductions in the amount of triplen harmonic voltage modulation of the AC voltage waveform in order to further optimise the number of limb portion components and the insulation class and clearance distance of any associated transformer.

According to a second aspect of the invention, there is provided a parallel-connected converter assembly comprising:
first and second converters, each converter including first and second DC terminals, each converter including at least one converter limb extending between the corresponding DC terminals, each converter limb including first and second limb portions separated by an AC terminal, each AC terminal connectable in use to an AC voltage, each limb portion including at least one director switch connected between the AC terminal and a respective one of the first and second DC terminals, the director switches of the first and second limb portions operable to switch the respective limb portions into and out of circuit between the respective DC terminal and the AC terminal; and
first and second DC transmission media respectively including first and second DC network terminals connectable in use to a DC network, the first DC transmission medium interconnecting the first DC terminals of the converters, the second DC transmission medium interconnecting the second DC terminals of the converters;
wherein the or each AC terminal of the first converter is connected to a first AC voltage, the or each AC terminal of the second converter is connected to a second AC voltage, and the first and second AC voltages are configured to be phase shifted relative to each other.

The features of the parallel-connected converter assembly of the second aspect of the invention and its embodiments share similar advantages as the corresponding features of the parallel-connected converter assembly of the first aspect of the invention and its embodiments.

In the parallel-connected converter assembly of the second aspect of the invention, the first and second converters may be first and second alternate arm converters respectively, each limb portion including the or each director switch connected in series with a chain-link converter between the AC terminal and a respective one of the first and second DC terminals, the chain-link converters of each converter limb operable to generate an AC voltage waveform at the corresponding AC terminal, the director switches of the first and second limb portions operable to switch the respective chain-link converters into and out of circuit between the respective DC terminal and the AC terminal.

In the parallel-connected converter assembly of the second aspect of the invention, the or each AC terminal of the first converter may be connected to a first AC voltage, the or each AC terminal of the second converter may be connected to a second AC voltage, and the first and second AC voltages may be configured to be phase shifted relative to each other.

In the parallel-connected converter assembly of the second aspect of the invention, the first and second AC voltages may be configured to be phase shifted relative to each other so that the duration during which the respective current conduction path is formed in the first converter is symmetrical or substantially symmetrical about a zero crossing of the first AC voltage and so that the duration during which the respective current conduction path is formed in the second converter is symmetrical or substantially symmetrical about a zero crossing of the second AC voltage.

In the parallel-connected converter assembly of the second aspect of the invention, the first and second AC voltages may be configured to be phase shifted relative to each other so that, in use, a harmonic current component appearing at a DC side of the first converter is in anti-phase with a harmonic current component appearing at a DC side of the second converter such that the harmonic current components cancel each other out at the DC network terminals.

In the parallel-connected converter assembly of the second aspect of the invention, the first and second AC voltages may be operatively linked to an AC network voltage, the parallel-connected converter assembly may further include a transformer assembly configured to connect the AC network voltage to either or both of the first and second AC voltages, and the transformer assembly may be configured so that the first and second AC voltages are phase shifted relative to each other.

In the parallel-connected converter assembly of the second aspect of the invention, the transformer assembly may be configured in a number of different arrangements in order so that the first and second AC voltages are phase shifted relative to each other. For example, the transformer assembly may be configured in:
a first arrangement in which a primary winding of the transformer assembly is connected to the AC network voltage, a star-connected secondary winding of the transformer assembly is connected to one of the first and second AC voltages, and a delta-connected secondary winding of the transformer assembly is connected to the other of the first and second AC voltages;
a second arrangement in which an autotransformer of the transformer assembly is configured to connect the AC network voltage to both of the first and second AC voltages, and the autotransformer is configured so that the first and second AC voltages are phase shifted relative to each other;
a third arrangement in which the transformer assembly is configured to connect the AC network voltage to only one of the first and second AC voltages, a primary winding of the transformer assembly is connected to the AC network voltage, a secondary winding of the transformer assembly is connected to one of the first and second AC voltages, and the other of the first and second AC voltages is directly connected to the AC network voltage.

In the parallel-connected converter assembly of the second aspect of the invention, the controller may be programmed to operate each converter so as to generate a 5^{th} harmonic current component and/or a 7^{th} harmonic current component at an AC side of each converter when the first and second AC voltages are phase shifted relative to each other.

In the parallel-connected converter assembly of the second aspect of the invention, the controller may be programmed to operate the limb portions of each converter to selectively inject one or more zero phase sequence triplen harmonic components into an AC voltage waveform at an AC side of each converter.

The following optional features apply to the parallel-connected converter assemblies of the invention.

A given chain-link converter may include a plurality of modules, each module including at least one switching element and at least one energy storage device, the or each switching element and the or each energy storage device in each module arranged to be combinable to selectively provide a voltage source.

The structure of the chain-link converter permits build-up of a combined voltage across the chain-link converter, which is higher than the voltage available from each of its individual modules, via the insertion of the energy storage devices of multiple modules, each providing its own voltage, into the chain-link converter. In this manner switching of the or each switching element in each module causes the chain-link converter to provide a stepped variable voltage source, which permits the generation of a voltage waveform across the chain-link converter using a step-wise approximation.

An exemplary module may include a pair of switching elements connected in parallel with an energy storage device in a half-bridge arrangement to define a 2-quadrant unipolar module that can provide zero or positive voltage and can conduct current in both directions.

Another exemplary module may include two pairs of switching elements connected in parallel with an energy storage device in a full-bridge arrangement to define a 4-quadrant bipolar module that can provide negative, zero or positive voltage and can conduct current in both directions.

A further exemplary module may include first and second sets of current flow control elements connected in parallel with an energy storage device in a full-bridge arrangement to form a 2-quadrant bipolar module that can provide negative, zero or positive voltage while conducting current in a single direction. Each set of current flow control elements may include an active switching element connected in series with a passive current check element.

A given director switch or switching element may include at least one self-commutated switching device. The or each self-commutated switching device may be an insulated gate bipolar transistor, a gate turn-off thyristor, a field effect transistor, an injection-enhanced gate transistor, an integrated gate commutated thyristor or any other self-commutated switching device. The number of switching devices in the given director switch or switching element may vary depending on the required voltage and current ratings of that director switch or switching element.

The given director switch or switching element may further include a passive current check element that is connected in anti-parallel with the or each switching device.

The or each passive current check element may include at least one passive current check device. The or each passive current check device may be any device that is capable of limiting current flow in only one direction, e.g. a diode. The number of passive current check devices in each passive current check element may vary depending on the required voltage and current ratings of that passive current check element.

Each energy storage device may be any type of energy storage device that is capable of releasing and storing energy to provide a voltage, such as a capacitor, fuel cell, or a battery.

It will be appreciated that the use of the terms "first" and "second", and the like, in this patent specification is merely intended to help distinguish between similar features (e.g. the first and second converters, the first and second limb portions, and so on), and is not intended to indicate the relative importance of one feature over another feature, unless otherwise specified.

Preferred embodiments of the invention will now be described, by way of nonlimiting examples, with reference to the accompanying drawings in which:
Figure 1 shows schematically a conventional alternate arm converter outputting a 6^{th} harmonic ripple current;
Figure 2 shows schematically a parallel-connected converter assembly according to a first embodiment of the invention;
Figure 3 shows schematically an arrangement of each converter of the parallel-connected converter assembly of Figure 2;
Figures 4 to 6 show schematically exemplary chain-link converter modules;
Figure 7 shows schematically an alternative arrangement of a transformer assembly of the parallel-connected converter assembly of Figure 2;
Figures 8 to 11 illustrate an operation of the parallel-connected converter assembly of Figure 2 to switch between its first and second modes in an operating cycle;
Figures 12 and 13 illustrate an alternative operation of the parallel-connected converter assembly of Figure 2;
Figure 14 compares the two operations illustrated in Figures 8 to 13;
Figure 15 illustrates a further operation of the parallel-connected converter assemblies of Figure 2;
Figure 16 shows schematically a parallel-connected converter assembly according to a second embodiment of the invention;
Figure 17 shows schematically a parallel-connected converter assembly according to a third embodiment of the invention;
Figures 18 to 20 illustrate a phase shift between first and second AC voltages of the parallel-connected converter assembly of Figure 17;
Figure 21 shows schematically a transformer assembly of a parallel-connected converter assembly according to a fourth embodiment of the invention; and
Figure 22 shows schematically a parallel-connected converter assembly according to a fifth embodiment of the invention.

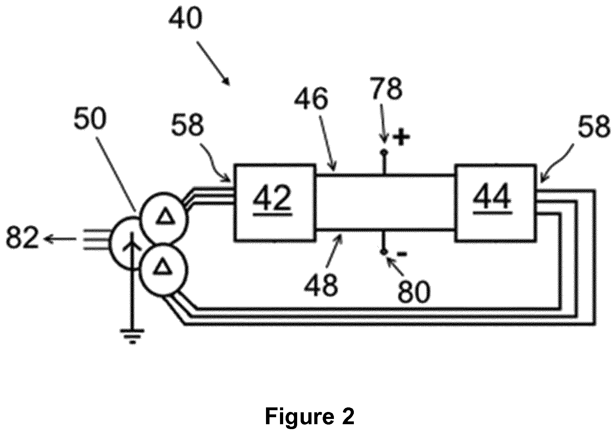

A parallel-connected converter assembly according to a first embodiment of the invention is shown in Figure 2 and is designated generally by the reference numeral 40.

The parallel-connected converter assembly 40 comprises first and second converters 42, 44, first and second DC transmission media 46, 48, and a transformer assembly 50.

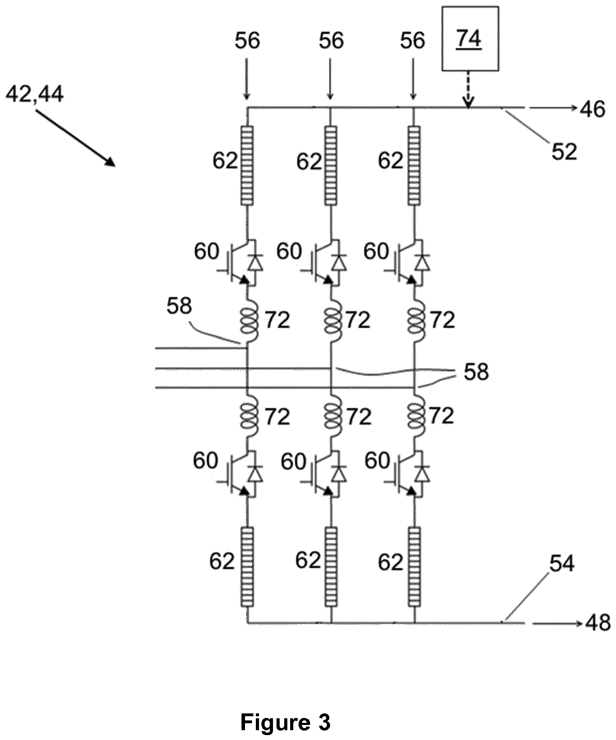

Each converter 42, 44 is in the form of an alternate arm converter, the general structure of which is shown in Figure 3. Each converter 42, 44 includes first and second DC terminals 52, 54 and a plurality of converter limbs 56. Each converter limb 56 extends between the corresponding DC terminals 52, 54, and includes first and second limb portions separated by a respective AC terminal 58. In each converter limb 56, the first limb portion extends between the first DC terminal 52 and the AC terminal 58, while the second limb portion extends between the second DC terminal 54 and the AC terminal 58.

Each limb portion includes a director switch 60 connected in series with a chain-link converter 62 between the AC terminal 58 and a respective one of the first and second DC terminals 52, 54.

Each director switch 60 includes a plurality of series-connected insulated gate bipolar transistors (IGBT). It is envisaged that, in other embodiments of the invention, each plurality of series-connected IGBTs in each director switch 60 may be replaced by a single IGBT.

The configuration of the limb portions in this manner means that, in use, the director switch 60 of each limb portion is switchable to switch the respective limb portion and therefore the respective chain-link converter 62 into and out of circuit between the respective AC and DC terminals 58, 52, 54.

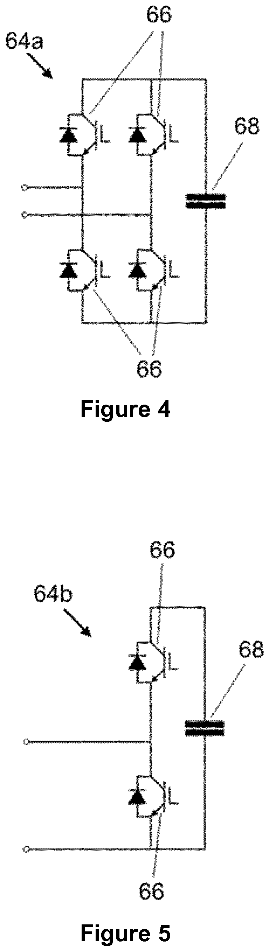

Each chain-link converter 62 includes a plurality of series-connected modules 64a. Figure 4 shows schematically the structure of each module 64a.

Each module 64a includes two pairs of switching elements 66 and a capacitor 68 in a full-bridge arrangement. The two pairs of switching elements 66 are connected in parallel with the capacitor 68 in a full-bridge arrangement to define a 4-quadrant bipolar module that can provide negative, zero or positive voltage and can conduct current in both directions.

Each switching element 66 includes an IGBT that is connected in parallel with an anti-parallel diode. It is envisaged that, in other embodiments of the invention, each single IGBT in each switching element 66 may be replaced by a plurality of series-connected IGBTs.

It is envisaged that, in other embodiments of the invention, each IGBT may be replaced by a gate turn-off thyristor, a field effect transistor, an injection-enhanced gate transistor, an integrated gate commutated thyristor or any other self-commutated semiconductor device. It is also envisaged that, in other embodiments of the invention, each diode may be replaced by a plurality of series-connected diodes.

The capacitor 68 of each module 64a is selectively bypassed or inserted into the corresponding chain-link converter 62 by changing the states of the switching element 66. This selectively directs current through the capacitor 68 or causes current to bypass the capacitor 68, so that the module 64a provides a negative, zero or positive voltage.

The capacitor 68 of the module 64a is bypassed when the switching element 66 in the module 64a are configured to form a short circuit in the module 64a, whereby the short circuit bypasses the capacitor 68. This causes current in the corresponding chain-link converter 62 to pass through the short circuit and bypass the capacitor 68, and so the module 64a provides a zero voltage, i.e. the module 64a is configured in a bypassed mode.

The capacitor 68 of the module 64a is inserted into the corresponding chain-link converter 62 when the switching element 66 in the module 64a are configured to allow the current in the corresponding chain-link converter 62 to flow into and out of the capacitor 68. The capacitor 68 then charges or discharges its stored energy so as to provide a non-zero voltage, i.e. the module 64a is configured in a non-bypassed mode. The full-bridge arrangement of the module 64a permits configuration of the switching element 66 in the module 64a to cause current to flow into and out of the capacitor 68 in either direction, and so the module 64a can be configured to provide a negative or positive voltage in the non-bypassed mode.

In this manner the switching elements 66 in each module 64a are switchable to control flow of current through the corresponding capacitor 68.

It is possible to build up a combined voltage across each chain-link converter 62, which is higher than the voltage available from each of its individual modules 64a, via the insertion of the capacitors 68 of multiple modules 64a, each providing its own voltage, into each chain-link converter 62. In this manner switching of the switching elements 66 in each module 64a causes each chain-link converter 62 to provide a stepped variable voltage source, which permits the generation of a voltage waveform across each chain-link converter 62 using a step-wise approximation. Hence, the switching elements 66 in each chain-link converter 62 are switchable to selectively permit and inhibit flow of current through the corresponding capacitor 68 in order to control a voltage across the corresponding chain-link converter 62.

It is envisaged that, in other embodiments of the invention, each module 64a may be replaced by another type of module, which includes at least one switching element and at least one energy storage device, the or each switching element and the or each energy storage device in each module being arranged to be combinable to selectively provide a voltage source.

One example of another type of module is a module 64b that includes a pair of switching elements 66 connected in parallel with a capacitor 68 in a half-bridge arrangement to define a 2-quadrant unipolar module that can provide zero or positive voltage and can conduct current in both directions, as shown in Figure 5.

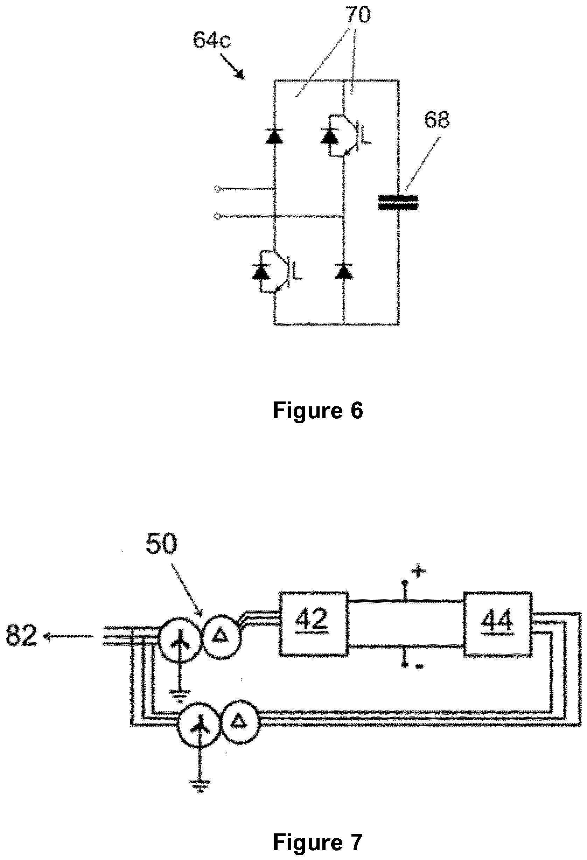

A further example of another type of module is a module 64c that includes first and second sets of current flow control elements 70 connected in parallel with a capacitor 68 in a full-bridge arrangement to form a 2-quadrant bipolar module that can provide negative, zero or positive voltage while conducting current in a single direction, where each set of current flow control elements includes an active switching element connected in series with a diode, as shown in Figure 6.

It is envisaged that, in other embodiments of the invention, the capacitor in each module may be replaced by another type of energy storage device which is capable of storing and releasing energy to provide a voltage, e.g. a battery or a fuel cell.

Each limb portion further includes a limb reactor 72 connected in series with the corresponding director switch 60 and chain-link converter 62.

Each converter 42, 44 further includes a control unit 74 programmed to control the switching of the director switches 60 and the switching elements 66 of the chain-link converters 62 in the limb portions. The control units 74 of the converters 42, 44 together form part of a controller.

It is envisaged that, in other embodiments of the invention, the controller may take a different form. For example, the two control units 74 may be replaced by a single control unit common to both converters 42, 44, or the controller may include a higher level control unit that receives information from the control units 74 and dispatches instructions to the control units 74.

The first DC transmission medium 46 interconnects the first DC terminals 52 of the converters 42, 44, while the second DC transmission medium 48 interconnects the second DC terminals 54 of the converters 42, 44. A first DC network terminal 78 is defined in the first DC transmission medium 46, a second DC network terminal 80 is defined in the second DC transmission medium 48, and the first and second DC network terminals 78, 80 are connected in use to a DC network.

The transformer assembly 50 includes a star-connected primary winding and a pair of delta-connected secondary windings. The primary winding is connected in use to an AC network voltage 82 of a multi-phase AC network, a first of the secondary windings is connected to the AC terminals 58 of the first converter 42, and a second of the secondary windings is connected to the AC terminals 58 of the second converter 44.

In other embodiments of the invention, the transformer assembly 50 may include a pair of star-connected primary windings and a pair of delta-connected secondary windings, as shown in Figure 7. Each primary winding is connected in use to an AC network voltage 82 of a multi-phase AC network, with a first of the primary windings being mutually coupled with a first of the secondary windings, and with a second of the primary windings being mutually coupled with a second of the secondary windings.

In order to transfer power between the AC and DC networks, the controller controls the switching of the director switches 60 to switch the respective chain-link converters 62 into and out of circuit between the respective AC and DC terminals to interconnect the AC and DC networks. When a given chain-link converter 62 is switched into circuit between the respective AC and DC terminals, the controller switches the switching elements 66 of the modules 64a of the given chain-link converter 62 to provide a stepped variable voltage source and thereby generate a voltage waveform so as to control the configuration of an AC voltage waveform at the corresponding AC terminal 58 to facilitate the transfer of power between the AC and DC networks.

To generate a positive AC voltage component of an AC voltage waveform at the AC terminal 58 of a given converter limb 56, the director switch 60 of the first limb portion is closed (to switch the chain-link converter 62 connected in series therewith into circuit between the first DC terminal 52 and the corresponding AC terminal 58) and the director switch 60 of the second limb portion is opened (to switch the chain-link converter 62 connected in series therewith out of circuit between the second DC terminal 54 and the corresponding AC terminal 58).

To generate a negative AC voltage component of an AC voltage waveform at the AC terminal 58 of a given converter limb 56, the director switch 60 of the second limb portion is closed (to switch the chain-link converter 62 connected in series therewith into circuit between the second DC terminal 54 and the corresponding AC terminal 58) and the director switch 60 of the first limb portion is opened (to switch the chain-link converter 62 connected in series therewith out of circuit between the first DC terminal 52 and the corresponding AC terminal 58).

The parallel connection of the first and second converters 42, 44 allows the power transfer duties to be divided equally between the first and second converters 42, 44, although it will be appreciated that the division of the power transfer duties between the first and second converters 42, 44 may vary.

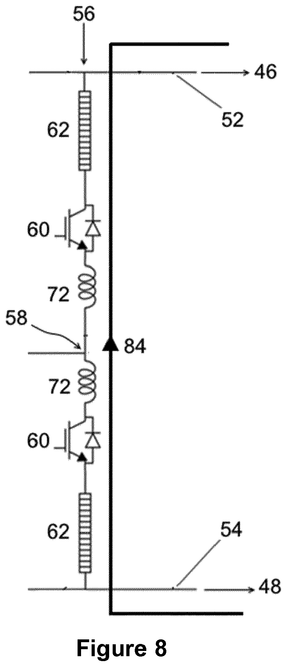

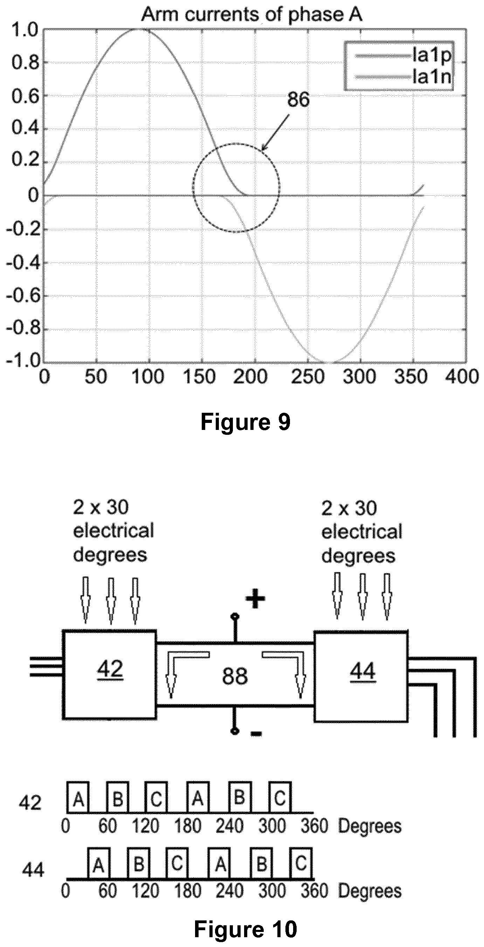

When a given converter limb 56 transitions between the corresponding positive and negative AC voltage components, the controller controls the switching of the corresponding director switches 60 to switch both of the corresponding limb portions into circuit concurrently to form a current conduction path 84 in the corresponding converter 42, 44, as shown in Figure 8. At the same time the corresponding chain-link converters 62 are operated to inject a controlled alternating current into the current conduction path 84 for presentation to the DC network terminals 78, 80 and therefore for presentation to the DC network. The flow of current 86 through both limb portions switched into circuit concurrently is illustrated in Figure 9 in which the converters 42, 44 are operating with real power transfer at unity power factor.

In the embodiment shown, the alternating current in the current conduction path 84 is controlled to form a 6^{th} harmonic current component (or at least one positive integer multiple thereof, e.g. 12^{th}, 18^{th} harmonic current components) that is anti-phase with the 6^{th} harmonic current component (or at least one positive integer multiple thereof, e.g. 12^{th}, 18^{th} harmonic current components) naturally produced by each converter 42, 44, and/or to minimise or cancel ripple present in the DC network.

Each respective current conduction path 84 is formed in the corresponding converter 42, 44 so that, in an operating cycle of the parallel-connected converter assembly 40, the parallel-connected converter assembly 40 alternates between first and second modes. In the first mode of the parallel-connected converter assembly 40, a current conduction path 84 is formed in one of the converter limbs 56 of the first converter 42, but no current conduction path 84 is formed in any of the converter limbs 56 of the second converter 44. In the second mode of the parallel-connected converter assembly 40, a current conduction path 84 is formed in one of the converter limbs 56 of the second converter 44, but no current conduction path 84 is formed in any of the converter limbs 56 of the first converter 42.

More specifically, as shown in Figure 10, the current conduction path 84 is formed in a first converter limb 56 of the first converter 42 from 0 to 30 electrical degrees and from 180 to 210 electrical degrees, the current conduction path 84 is formed in a first converter limb 56 of the second converter 44 from 30 to 60 electrical degrees and from 210 to 240 electrical degrees, the current conduction path 84 is formed in a second converter limb 56 of the first converter 42 from 60 to 90 electrical degrees and from 240 to 270 electrical degrees, the current conduction path 84 is formed in a second converter limb 56 of the second converter 44 from 90 to 120 electrical degrees and 270 to 300 electrical degrees, the current conduction path 84 is formed in a third converter limb 56 of the first converter 42 from 120 to 150 electrical degrees and from 300 to 330 electrical degrees, and the current conduction path 84 is formed in a third converter limb 56 of the second converter 44 from 150 to 180 electrical degrees and from 330 to 360 electrical degrees. Each current conduction path 84 is therefore formed in the corresponding converter 42, 44 for two separate durations of 30 electrical degrees in the operating cycle of the parallel-connected converter assembly 40.

The operation of the parallel-connected converter assembly 40 to alternate between the first and second modes in the above manner result in the formation of a continuous current path 88 between the first and second DC network terminals 78, 80, which allows the converters 42, 44 to provide the DC network with continuous active filtering throughout the operating cycle of the parallel-connected converter assembly 40.

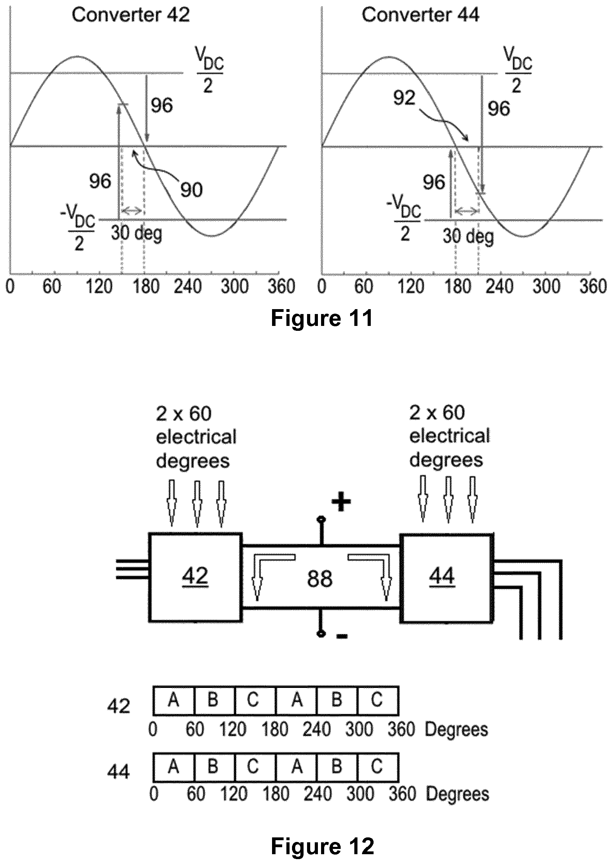

As shown in Figure 11, since each converter 42, 44 is fed from the same AC network voltage 82, the duration 90 during which the respective current conduction path 84 is formed in the first converter 42 is asymmetrical about a zero crossing of a first AC voltage at the AC side of the first converter 42, and the duration 92 during which the respective current conduction path 84 is formed in the second converter 44 is asymmetrical about a zero crossing of a second AC voltage at the AC side of the second converter 44.

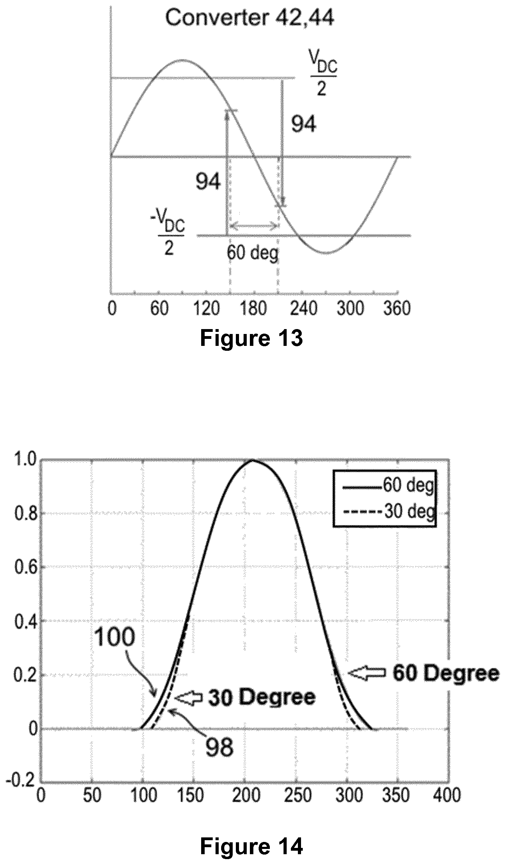

Figures 12 and 13 illustrates an alternative operation of forming the respective current conduction path 84 in each converter 42, 44 in the operating cycle of the parallel-connected converter assembly 40. In Figure 12, the respective current conduction paths 84 are formed in the first converter limbs 56 of both converters 42, 44 from 0 to 60 electrical degrees and from 180 to 240 electrical degrees, the respective current conduction paths 84 are formed in the second converter limbs 56 of both converters 42, 44 from 60 to 120 electrical degrees and from 240 to 300 electrical degrees, and the respective current conduction paths 84 are formed in the third converter limbs 56 of both converters 42, 44 from 120 to 180 electrical degrees and from 300 to 360 electrical degrees. Each current conduction path 84 is therefore formed in the corresponding converter 42, 44 for two separate durations of 60 electrical degrees in the operating cycle of the parallel-connected converter assembly 40.

Although the alternative operation of Figures 12 and 13 also results in the formation of a continuous current path 88 between the DC network terminals 78, 80, the longer duration of 60 electrical degrees means that each limb portion is required to have a higher voltage rating 94 (and therefore a higher number of limb portion components) in order to provide the required voltage range to enable the formation of the continuous current path 88 when compared to the required voltage ratings 96 of the limb portions in order to facilitate the operation of Figure 10 in which each duration only spans 30 electrical degrees.

In other words, the formation of the continuous current path 88 by alternating between the first and second modes of the parallel-connected converter assembly 40 requires a fewer number of limb portion components than the formation of the continuous current path 88 by forming the respective current conduction paths 84 in both converters 42, 44 throughout the operating cycle of the parallel-connected converter assembly 40.

Figure 14 shows the difference between the current 98 in the current conduction path 84 formed for 30 electrical degrees and the current 100 formed in the current conduction path 84 formed for 60 electrical degrees for the same power transfer and complete cancellation of ripple current at the DC network. It can be seen from Figure 14 that there is a noticeable comparative reduction in the current 98 in the current conduction path 84 formed for 30 and 60 electrical degrees, which equates to a reduction in the Root Mean Square (RMS) value of the limb portion current by approximately 4% that in turn improves the efficiency of the converter station and reduces the burden on the associated cooling equipment/thermal management system.

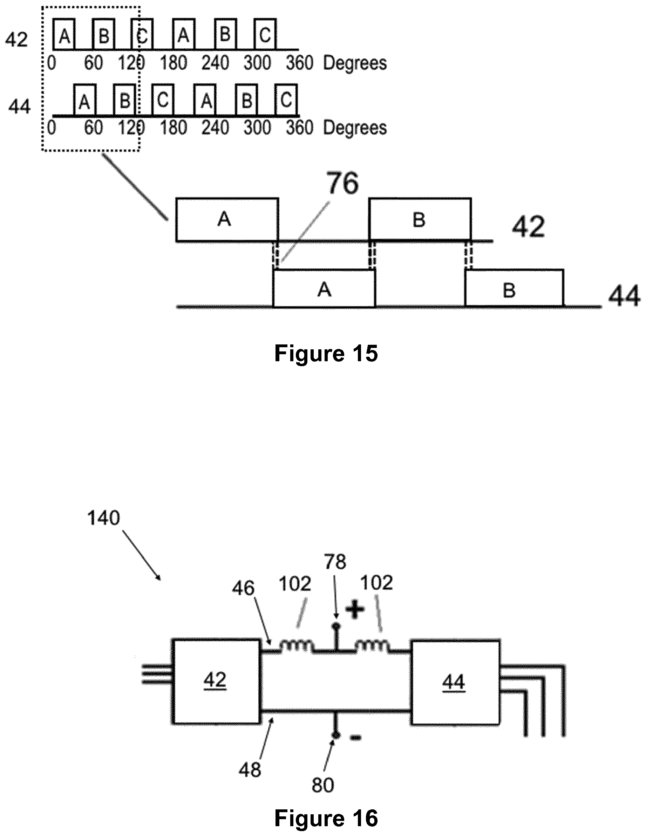

Optionally the controller may control the switching of the director switches 60 so that the parallel-connected converter assembly 40 is in a third mode in which the respective current conduction paths 84 are respectively formed in the first and second converters 42, 44 during a transition period 76 between the first and second modes. This is achieved by extending the duration of each current conduction path 84 to slightly more than 30 electrical degrees (e.g. 31 electrical degrees) with minimal impact on the voltage ratings of the limb portion components, as shown in Figure 15.

The third mode removes the risk of discontinuity when the parallel-connected converter assembly 40 switches between the first and second modes, and thereby ensures that the continuous current path 88 between the DC network terminals 78, 80 is formed throughout the operating cycle of the parallel-connected converter assembly 40. This in turn prevents any discontinuity in the active filtering of the DC network.

A parallel-connected converter assembly according to a second embodiment of the invention is shown in Figure 16 and is designated generally by the reference numeral 140. The structure and operation of the parallel-connected converter assembly 140 of Figure 16 is similar to the structure and operation of the parallel-connected converter assembly 40 of Figure 2, and like features share the same reference numerals.

The parallel-connected converter assembly 140 of Figure 16 differs from the parallel-connected converter assembly 40 of Figure 2 in that the parallel-connected converter assembly 140 of Figure 16 further includes a pair of DC reactors 102 connected in the first DC transmission medium 46 and on both sides of the first DC network terminal 78.

In the parallel-connected converter assembly 40 of Figure 2, the limb reactors 72 facilitate the control/shaping of the limb portion currents, enable the corresponding limb portions to be switched into circuit concurrently to form the current conduction path 84, and prevent transient current flow between adjacent parallel converter limbs 56 as the capacitors 68 of their modules 64a are switched into and out of circuit.

However, the use of a 30 electrical degrees duration for the respective current conduction path 84 does not require the operation of the corresponding converter 42, 44 with adjacent converter limbs 56 connected in parallel. Therefore, it is possible to only include the DC reactors 102 as control inductance in the DC power transmission media 46, 48 between the converters 42, 44, and omit the limb reactors 72 from the converters 42, 44.

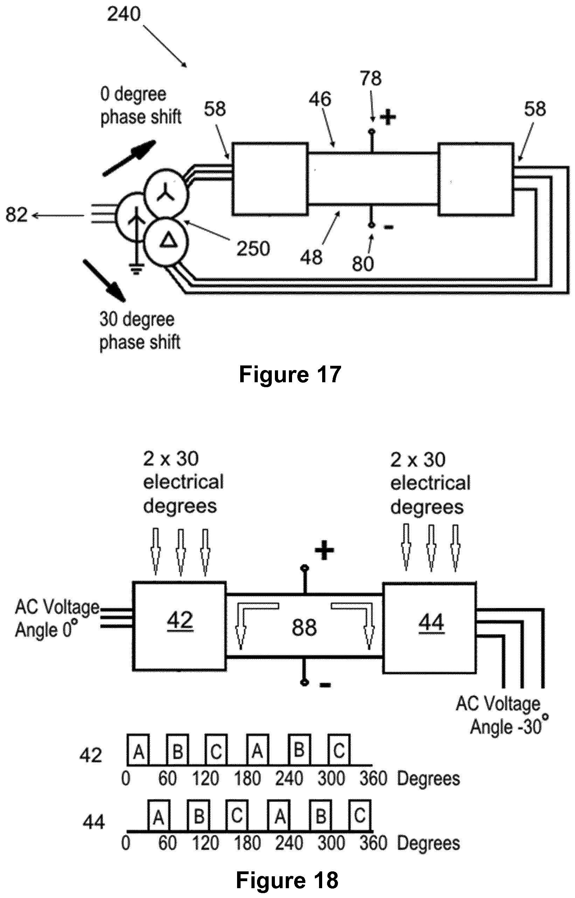

A parallel-connected converter assembly according to a third embodiment of the invention is shown in Figure 17 and is designated generally by the reference numeral 240. The structure and operation of the parallel-connected converter assembly 240 of Figure 17 is similar to the structure and operation of the parallel-connected converter assembly 40 of Figure 2, and like features share the same reference numerals.

The parallel-connected converter assembly 240 of Figure 17 differs from the parallel-connected converter assembly 40 of Figure 2 in that, in the parallel-connected converter assembly 240 of Figure 17, the transformer assembly 250 has a different configuration.

More specifically, a primary winding of the transformer assembly 250 is connected to the AC network voltage 82, a star-connected secondary winding of the transformer assembly 250 is connected to a first AC voltage at the AC side of the first converter 42, and a delta-connected secondary winding of the transformer assembly 250 is connected to a second AC voltage at the AC side of the second converter 44. The use of the delta-connected secondary winding with the star-connected primary winding results in a 30 electrical degrees phase shift between the first and second AC voltages relative to each other, as shown in Figure 18.

In turn the 30 electrical degrees phase shift between the first and second AC voltages relative to each other results in the duration during which the respective current conduction path 84 is formed in the first converter 42 to be symmetrical about a zero crossing of the first AC voltage and also results in the duration during which the respective current conduction path 84 is formed in the second converter 44 to be symmetrical about a zero crossing of the second AC voltage.

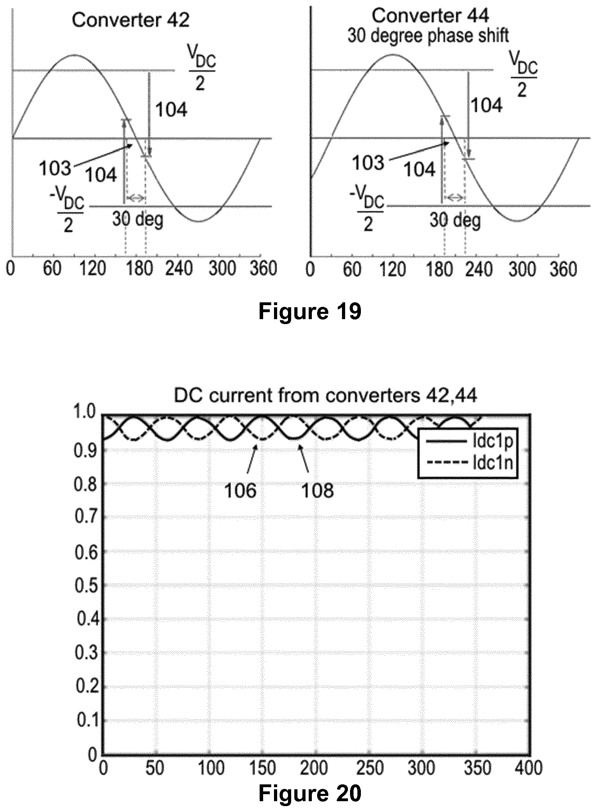

With such a phase shift introduced between the first and second AC voltages fed to the first and second converters 42, 44, the continuous current path 88 between the DC network terminals 78, 80 can be maintained using converters 42, 44 with symmetrical voltage ratings 104 in the limb portions of each converter limb 56, as illustrated in Figure 19.

In addition the 30 electrical degrees phase shift between the first and second AC voltages relative to each other means that, in use, a 6^{th} harmonic current component 106 appearing at a DC side of the first converter 42 is in anti-phase with a 6^{th} harmonic current component 108 appearing at a DC side of the second converter 44 such that the 6^{th} harmonic current components 106, 108 cancel each other out at the DC network terminals 78, 80, as shown in Figure 20. This advantageously has the effect of reducing the active filtering requirements and therefore the number of limb portion components of the converters 42, 44, since it is no longer necessary to actively filter the 6^{th} harmonic current components produced by the converters 42, 44.

The same approach can be applied to other higher frequency harmonic current components (e.g. 18^{th}, 30^{th} harmonic current components) that appear in anti-phase at the DC terminals 52, 54 of the converters 42, 44.

In use, the controller may operate the limb portions of each converter 42, 44 to selectively inject one or more zero phase sequence triplen harmonic components into an AC voltage waveform at an AC side of each converter 42, 44. This has the effect of reducing the voltage ratings of the limb portions that are required to form the respective current conduction paths 84. Such triplen harmonic voltage modulation however has the effect of increasing the peak voltage of the AC voltage waveform and thereby increasing the voltage stress applied to the insulation, which particularly impacts on the insulation class of the transformer and air clearances within the valve hall.

On the other hand the reduction in the number of limb portion components provided by the provision of the phase shift between the first and second AC voltages permits a reduction in the required amount of triplen harmonic voltage modulation of the AC voltage waveform, which has the effect of reducing the resultant voltage stress. The reduction in voltage stress is important because it reduces the insulation class of any associated transformer (which reduces cost, weight and footprint) and reduces clearance distances which enables a more compact converter station layout to be achieved.

Optionally the controller may operate each converter 42, 44 so as to generate 5^{th} and 7^{th} harmonic current components at an AC side of each converter 42, 44. The provision of 30 electrical degrees phase shift between the first and second AC voltage allows each converter 42, 44 to generate 5^{th} and 7^{th} harmonic current components that would be cancelled by the transformer assembly 250 and therefore would not be seen in the AC lines directly connected to the AC network voltage 82. It is therefore possible to operate each converter 42, 44 to generate AC side 5^{th} and 7^{th} harmonic current components, which in turn would affect the limb portion currents and alter the magnitude of the 6^{th} harmonic current component appearing at the DC terminals 52, 54.

There is provided a parallel-connected converter assembly according to a fourth embodiment of the invention. The structure and operation of the parallel-connected converter assembly according to the fourth embodiment of the invention is similar to the structure and operation of the parallel-connected converter assembly 240 of Figure 17, and like features share the same reference numerals.

The parallel-connected converter assembly according to the fourth embodiment of the invention differs from the parallel-connected converter assembly 240 of Figure 17 in that, in the parallel-connected converter assembly according to the fourth embodiment of the invention, the transformer assembly 350 includes an autotransformer 110 configured to connect the AC network voltage 82 to both of the first and second AC voltages, and the autotransformer 110 is configured so that the first and second AC voltages are phase shifted relative to each other.

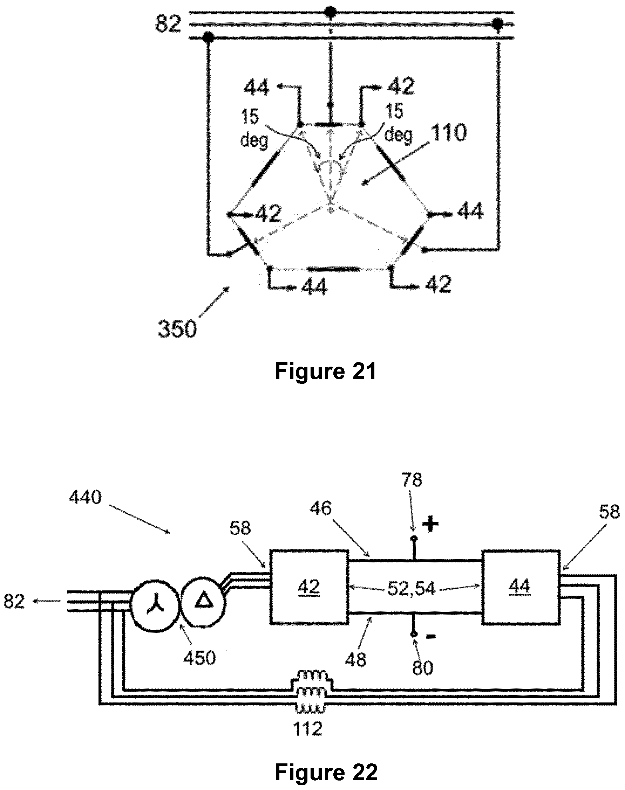

In the embodiment shown in Figure 21, the autotransformer 110 is a polygon-connected autotransformer that introduces the total 30 electrical degrees phase shift between the first and second AC voltages. This allows the transformer assembly 350 to have a total MVA rating of only about 15-20% of the throughput power and is therefore much smaller and lighter than the transformer assembly 250 based on an isolated transformer as shown in Figure 17. Such features of the transformer assembly 350 is desirable for off-shore and inner city converter stations.

A parallel-connected converter assembly according to a fifth embodiment of the invention is shown in Figure 22 and is designated generally by the reference numeral 440. The structure and operation of the parallel-connected converter assembly 440 of Figure 22 is similar to the structure and operation of the parallel-connected converter assembly 240 of Figure 17, and like features share the same reference numerals.

The parallel-connected converter assembly 440 of Figure 22 differs from the parallel-connected converter assembly 240 of Figure 17 in that, in the parallel-connected converter assembly 440 of Figure 22, the transformer assembly 450 is configured to connect the AC network voltage 82 to only one of the first and second AC voltages, a star-connected primary winding of the transformer assembly 450 is connected to the AC network voltage 82, a delta-connected secondary winding of the transformer assembly 450 is connected to the first AC voltage, and the second AC voltages is directly connected to the AC network voltage 82 via line reactors 112 that provide AC side inductive coupling for current control.

Such a configuration of the transformer assembly 450 is particularly useful when magnetic isolation and a step-up/down of AC voltage is not required between the AC network and a given converter, which in this embodiment is the second converter 44. A transformer assembly 450 based on a star-delta transformer of 50% MVA rating could then be used to introduce the phase shift between the first and second AC voltages.

It is envisaged that, in other embodiments of the invention, each converter may include a different number of converter limbs, wherein the AC terminal of each converter limb is connectable to a respective phase of a multi-phase AC voltage. It is further envisaged that, in other embodiments of the invention, the converter may include a single converter limb wherein the AC terminal is connectable to a single-phase AC voltage.

It will be appreciated that the topology of each converter 42, 44 in the embodiments shown is merely chosen to help illustrate the working of the invention, and may be replaced by another type of converter topology.

It will be appreciated that each numerical value given for the embodiment shown is merely chosen to help illustrate the working of the invention, and may be replaced by another numerical value. For example, the duration of the respective current conduction path 84 may vary from 30 electrical degrees.

## Claims

1. A parallel-connected converter assembly (40) comprising:
first and second converters (42, 44), each converter (42, 44) including first and second DC terminals (52, 54), each converter (42, 44) including at least one converter limb (56) extending between the corresponding DC terminals (52, 54), each converter limb (56) including first and second limb portions separated by an AC terminal (58), each AC terminal (58) connectable in use to an AC voltage (82), each limb portion including at least one director switch (60) connected between the AC terminal (58) and a respective one of the first and second DC terminals (52, 54), the director switches (60) of the first and second limb portions operable to switch the respective limb portions into and out of circuit between the respective DC terminal (52, 54) and the AC terminal (58);
first and second DC transmission media (46, 48) respectively including first and second DC network terminals (78, 80) connectable in use to a DC network, the first DC transmission medium (78) interconnecting the first DC terminals (52) of the converters (42, 44), the second DC transmission medium (80) interconnecting the second DC terminals (54) of the converters (42, 44); and
a controller (74) programmed to selectively control the switching of the director switches (60) of each converter limb to switch both of the corresponding limb portions into circuit concurrently to form a current conduction path in the corresponding converter (42, 44), the respective current conduction path configured to carry a current for presentation to the DC network terminals (52, 54), wherein the controller (74) is further programmed to selectively control the switching of the director switches (60) so that, in an operating cycle of the parallel-connected converter assembly (40), the parallel-connected converter assembly (40) switches between:
(i) a first mode in which the respective current conduction path (84) is formed in the first converter (42) and the respective current conduction path (84) is not formed in the second converter (44); and
(ii) a second mode in which the respective current conduction path (84) is formed in the second converter (44) and the respective current conduction path (84) is not formed in the first converter (42);
**characterized in that** the AC terminals (58) of the converters (42, 44) are connected to the same AC voltage, and the controller (74) is further programmed to selectively control the switching of the director switches (60) so that the duration (90) during which the respective current conduction path (84) is formed in the first converter (42) is asymmetrical or substantially asymmetrical about a zero crossing of the first AC voltage and so that the duration (92) during which the respective current conduction path (84) is formed in the second converter (44) is asymmetrical or substantially asymmetrical about a zero crossing of the second AC voltage.

2. A parallel-connected converter assembly (40, 140, 240, 440) according to Claim 1 wherein the respective current conduction path (84) is configured to carry an alternating current for presentation to the DC network terminals.

3. A parallel-connected converter assembly (40, 140, 240, 440) according to Claim 1 or Claim 2 wherein the first and second converters (42, 44) are first and second alternate arm converters respectively, each limb portion including the or each director switch (60) connected in series with a chain-link converter (62) between the AC terminal (58) and a respective one of the first and second DC terminals (52, 54), the chain-link converters 62) of each converter limb (56) operable to generate an AC voltage waveform at the corresponding AC terminal (58), the director switches (60) of the first and second limb portions operable to switch the respective chain-link converters (62) into and out of circuit between the respective DC terminal (52, 54) and the AC terminal (58).

4. A parallel-connected converter assembly (40, 140, 240, 440) according to any one of the preceding claims wherein the controller (74) is further programmed to selectively control the switching of the director switches (60) so that the parallel-connected converter assembly (40, 140, 240, 440) alternates between the first and second modes in the operating cycle of the parallel-connected converter assembly (40, 140, 240, 440).

5. A parallel-connected converter assembly (40, 140, 240, 440) according to any one of the preceding claims wherein the controller (74) is further programmed to selectively control the switching of the director switches (60) so that the parallel-connected converter assembly (40, 140, 240, 440) is in either of the first and second modes at any given time in the operating cycle of the parallel-connected converter assembly (40, 140, 240, 440).

6. A parallel-connected converter assembly (40, 140, 240, 440) according to any one of the preceding claims wherein the controller (74) is further programmed to selectively control the switching of the director switches (60) so that the parallel-connected converter assembly (40, 140, 240, 440) is in a third mode in which the respective current conduction paths (84) are respectively formed in the first and second converters (42, 44) during a transition period (76) between the first and second modes.

7. A parallel-connected converter assembly (40, 140, 240, 440) according to any one of the preceding claims wherein, when either or both of the converters (42, 44) includes a plurality of converter limbs (56), the controller (74) is further programmed to selectively control the switching of the director switches (60) of each of the plurality of converter limbs (56) to switch both of the corresponding limb portions into circuit concurrently to form a respective current conduction path (84) in the corresponding converter (42, 44), and the controller (74) is further programmed to selectively control the switching of the director switches (60) of the plurality of converter limbs (56) to form the respective current conduction paths (84) at respective different times in the operating cycle of the parallel-connected converter assembly (40, 140, 240, 440).

8. A parallel-connected converter assembly (140) according to any one of the preceding claims further including at least one reactor (102) connected in the DC transmission media (46, 48) between the converters (42, 44).

9. A parallel-connected converter assembly (240, 440) according to any one of the preceding claims wherein the or each AC terminal (58) of the first converter (42) is connected to a first AC voltage, the or each AC terminal (58) of the second converter (44) is connected to a second AC voltage, and the first and second AC voltages are configured to be phase shifted relative to each other.

10. A parallel-connected converter assembly (240, 440) according to Claim 9 wherein the first and second AC voltages are configured to be phase shifted relative to each other so that the duration during which the respective current conduction path (84) is formed in the first converter (42) is symmetrical or substantially symmetrical about a zero crossing of the first AC voltage and so that the duration during which the respective current conduction path (84) is formed in the second converter (44) is symmetrical or substantially symmetrical about a zero crossing of the second AC voltage.

11. A parallel-connected converter assembly (240, 440) according to Claim 9 or Claim 10 wherein the first and second AC voltages are configured to be phase shifted relative to each other so that, in use, a harmonic current component (106) appearing at a DC side of the first converter (420 is in anti-phase with a harmonic current component (108) appearing at a DC side of the second converter (44) such that the harmonic current components (106, 108) cancel each other out at the DC network terminals (78, 80).

12. A parallel-connected converter assembly (240, 440) according to any one of Claims 9 to 11 wherein the first and second AC voltages are operatively linked to an AC network voltage (82), the parallel-connected converter assembly (240, 440) further includes a transformer assembly (250, 350, 450) configured to connect the AC network voltage (82) to either or both of the first and second AC voltages, and the transformer assembly (250, 350, 450) is configured so that the first and second AC voltages are phase shifted relative to each other.

13. A parallel-connected converter assembly (240, 440) according to any one of Claims 9 to 12 wherein the transformer assembly (250, 350, 450) is configured in:
a first arrangement in which a primary winding of the transformer assembly (250) is connected to the AC network voltage (82), a star-connected secondary winding of the transformer assembly (250) is connected to one of the first and second AC voltages, and a delta-connected secondary winding of the transformer assembly (250) is connected to the other of the first and second AC voltages;
a second arrangement in which an autotransformer (110) of the transformer assembly (350) is configured to connect the AC network voltage (82) to both of the first and second AC voltages, and the autotransformer (110) is configured so that the first and second AC voltages are phase shifted relative to each other; or
a third arrangement in which the transformer assembly (450) is configured to connect the AC network voltage (82) to only one of the first and second AC voltages, a primary winding of the transformer assembly (450) is connected to the AC network voltage (82), a secondary winding of the transformer assembly (450) is connected to one of the first and second AC voltages, and the other of the first and second AC voltages is directly connected to the AC network voltage (82).

14. A parallel-connected converter assembly (40, 140, 240, 440) according to any one of Claims 9 to 13 wherein the controller (74) is programmed to operate each converter (42, 44) so as to generate a 5th harmonic current component and/or a 7th harmonic current component at an AC side of each converter (42, 44) when the first and second AC voltages are phase shifted relative to each other.

15. A parallel-connected converter assembly (40, 140, 240, 440) according to any one of the preceding claims wherein the controller (74) is programmed to operate the limb portions of each converter (42, 44) to selectively inject one or more zero phase sequence triplen harmonic components into an AC voltage waveform at an AC side of each converter (42, 44).

## Patentansprüche

1. Parallel geschaltete Wandleranordnung (40), umfassend:
erste und zweite Wandler (42, 44), wobei jeder Wandler (42, 44) erste und zweite Gleichstromanschlüsse (52, 54) aufweist, wobei jeder Wandler (42, 44) mindestens einen Wandlerschenkel (56) aufweist, der sich zwischen den entsprechenden Gleichstromanschlüssen (52, 54) erstreckt, wobei jeder Wandlerschenkel (56) einen ersten und einen zweiten Schenkelabschnitt aufweist, die durch einen Wechselstromanschluss (58) voneinander getrennt sind, wobei jeder Wechselstromanschluss (58) im Gebrauch an eine Wechselstromspannung (82) angeschlossen werden kann, wobei jeder Schenkelabschnitt mindestens einen Lenkungsvermittler (60) aufweist, der zwischen dem Wechselstromanschluss (58) und einem jeweiligen der ersten und zweiten Gleichstromanschlüsse (52, 54) angeschlossen ist, wobei die Lenkungsvermittler (60) des ersten und des zweiten Schenkelabschnitts betrieben werden können, um die jeweiligen Schenkelabschnitte in die und aus der Schaltung zwischen dem zugehörigen Gleichstromanschluss (52, 54) und Wechselstromanschluss (58) zu schalten;
erste und zweite Gleichstromübertragungsmedien (46, 48), die jeweils erste und zweite Gleichstromnetzanschlüsse (78, 80) aufweisen, die im Gebrauch an ein Gleichstromnetz angeschlossen werden können, wobei das erste Gleichstrom-Übertragungsmedium (78) die ersten Gleichstromanschlüsse (52) der Wandler (42, 44) miteinander verschaltet, wobei das zweite Gleichstrom-Übertragungsmedium (80) die zweiten Gleichstromspannungsanschlüsse (54) der Wandler (42, 44) zusammenschaltet; und
eine Steuerung (74), die programmiert ist, um selektiv das Schalten der Lenkungsvermittler (60) jedes Wandlerschenkels zu steuern, um beide entsprechenden Schenkelabschnitte gleichzeitig in eine Schaltung zu schalten, um einen Stromleitungsweg im entsprechenden Wandler (42, 44) zu bilden, wobei der jeweilige Stromleitungsweg konfiguriert ist, um einen Strom zur Überreichung an den Gleichstromnetzanschlüssen (52, 54) zu tragen, wobei die Steuerung (74) weiter programmiert ist, um selektiv das Umschalten der Lenkungsvermittler (60) zu steuern, so dass in einem Betriebszyklus der parallel geschalteten Wandleranordnung (40) die parallel geschaltete Wandleranordnung (40) umschaltet zwischen:
(i) einem ersten Modus, in dem der jeweilige Stromleitungsweg (84) im ersten Wandler (42) ausgebildet ist und der jeweilige Stromleitungsweg (84) nicht im zweiten Wandler (44) ausgebildet ist; und
(ii) einem zweiten Modus, in dem der jeweilige Stromleitungsweg (84) im zweiten Wandler (44) ausgebildet ist und der jeweilige Stromleitungsweg (84) nicht im ersten Wandler (42) ausgebildet ist;
**dadurch gekennzeichnet, dass** die Wechselstromanschlüsse (58) der Wandler (42, 44) an die gleiche Wechselstromspannung angeschlossen sind und die Steuerung (74) weiter programmiert ist, um selektiv das Schalten der Lenkungsvermittler (60) zu steuern, so dass die Dauer (90), bei welcher der jeweilige Stromleitungsweg (84) in dem ersten Wandler (42) ausgebildet wird, asymmetrisch oder im Wesentlichen asymmetrisch um einen Nulldurchgang der ersten Wechselstromspannung ist, und so dass die Dauer (92), bei welcher der jeweilige Stromleitungsweg (84) im zweiten Wandler (44) ausgebildet wird, asymmetrisch oder im Wesentlichen asymmetrisch um einen Nulldurchgang der zweiten Wechselstromspannung ist.

2. Parallel geschaltete Wandleranordnung (40, 140, 240, 440) nach Anspruch 1, wobei der jeweilige Stromleitungsweg (84) konfiguriert ist, um einen Wechselstrom zur Präsentation an die Gleichstromnetzanschlüsse zu tragen.

3. Parallel geschaltete Wandleranordnung (40, 140, 240, 440) nach Anspruch 1 oder Anspruch 2, wobei der erste und der zweite Wandler (42, 44) jeweils erste und zweite Wechselarmwandler sind, wobei jeder Schenkelabschnitt den oder jeden Lenkungsvermittler (60) aufweist, die in Reihe mit einem Kettengliedwandler (62) zwischen dem Wechselstromanschluss (58) und einem jeweiligen von erstem und zweitem Gleichstromanschluss (52, 54) geschaltet ist, wobei die Kettengliedwandler (62) jedes Wandlerschenkels (56) betrieben werden können, um eine Wechselstromspannungs-Wellenform an dem entsprechenden Wechselstromanschluss (58) zu erzeugen, wobei die Lenkungsvermittler (60) des ersten und zweiten Schenkelabschnitts betrieben werden können, um die jeweiligen Kettengliedwandler (62) in die und aus der Schaltung zwischen dem jeweiligen Gleichstromanschluss (52, 54) und dem Wechselstromanschluss (58) zu schalten.

4. Parallel geschaltete Wandleranordnung (40, 140, 240, 440) nach einem der vorstehenden Ansprüche, wobei die Steuerung (74) weiter programmiert ist, um das Schalten der Lenkungsvermittler (60) selektiv zu steuern, so dass die parallel geschaltete Wandleranordnung (40, 140, 240, 440) zwischen dem ersten und dem zweiten Modus in dem Betriebszyklus der parallel geschalteten Wandleranordnung (40, 140, 240, 440) wechselt.

5. Parallel geschaltete Wandleranordnung (40, 140, 240, 440) nach einem der vorstehenden Ansprüche, wobei die Steuerung (74) weiter programmiert ist, um das Schalten der Lenkungsvermittler (60) selektiv zu steuern, so dass die parallel geschaltete Wandleranordnung (40, 140, 240, 440) zu einer vorgegebenen Zeit in dem Betriebszyklus der parallel geschalteten Wandleranordnung (40, 140, 240, 440) entweder im ersten oder zweiten Modus ist.

6. Parallel geschaltete Wandleranordnung (40, 140, 240, 440) nach einem der vorstehenden Ansprüche, wobei die Steuerung (74) weiter programmiert ist, um das Schalten der Lenkungsvermittler (60) selektiv zu steuern, so dass die parallel geschaltete Wandleranordnung (40, 140, 240, 440) in einem dritten Modus ist, in dem die jeweiligen Stromleitungswege (84) jeweils in dem ersten und dem zweiten Wandler (42, 44) während einer Übergangszeit (76) zwischen dem ersten und dem zweiten Modus ausgebildet werden.

7. Parallel geschaltete Wandleranordnung (40, 140, 240, 440) nach einem der vorstehenden Ansprüche, wobei, wenn einer oder beide der Wandler (42, 44) eine Vielzahl von Wandlerschenkeln (56) aufweist/aufweisen, die Steuerung (74) weiter programmiert ist, um das Schalten der Lenkungsvermittler (60) jeder der Vielzahl von Wandlerschenkeln (56) zum gleichzeitigen Schalten beider der entsprechenden Schenkelabschnitte in die Schaltung selektiv zu steuern, um einen jeweiligen Stromleitungsweg (84) in dem entsprechenden Wandler (42, 44) auszubilden, und wobei die Steuerung (74) weiter programmiert ist, um das Schalten der Lenkungsvermittler (60) der Vielzahl von Wandlerschenkeln (56) zum Bilden der jeweiligen Stromleitungswege (84) zu jeweiligen unterschiedlichen Zeiten in dem Betriebszyklus der parallel geschalteten Wandleranordnung (40, 140, 240, 440) selektiv zu steuern.

8. Parallel geschaltete Wandleranordnung (140) nach einem der vorstehenden Ansprüche, weiter aufweisend mindestens einen Reaktor (102), der in dem Gleichstromübertragungsmedium (46, 48) zwischen den Wandlern (42, 44) angeschlossen ist.

9. Parallel geschaltete Wandleranordnung (240, 440) nach einem der vorstehenden Ansprüche, wobei der oder jeder Wechselstromanschluss (58) des ersten Wandlers (42) an eine erste Wechselstromspannung angeschlossen ist, wobei der oder jeder Wechselstromanschluss (58) des zweiten Wandlers (44) an eine zweite Wechselstromspannung angeschlossen ist, und die erste und die zweite Wechselstromspannung konfiguriert sind, um relativ zueinander phasenverschoben zu sein.

10. Parallel geschaltete Wandleranordnung (240, 440) nach Anspruch 9, wobei die erste und die zweite Wechselstromspannung konfiguriert sind, um relativ zueinander phasenverschoben zu sein, so dass die Dauer, bei welcher der jeweilige Stromleitungsweg (84) in dem ersten Wandler (42) ausgebildet ist, symmetrisch oder im Wesentlichen symmetrisch um eine Nullkreuzung der ersten Wechselstromspannung ist, und so dass die Dauer, bei welcher der jeweilige Stromleitungsweg (84) in dem zweiten Wandler (44) ausgebildet ist, symmetrisch oder im Wesentlichen symmetrisch um eine Nullkreuzung der zweiten Wechselstromspannung ist.

11. Parallel geschaltete Wandleranordnung (240, 440) nach Anspruch 9 oder Anspruch 10, wobei die erste und die zweite Wechselstromspannung konfiguriert sind, um relativ zueinander phasenverschoben zu sein, so dass im Gebrauch eine Oberwellenstromkomponente (106), die auf einer Gleichstromseite des ersten Wandlers (420) auftritt, gegenphasig mit einer Oberwellenstromkomponente (108) ist, die an einer Gleichstromseite des zweiten Wandlers (44) auftritt, sodass sich die Oberwellenstromkomponenten (106, 108) an den Gleichstromnetzanschlüssen (78, 80) gegenseitig aufheben.

12. Parallel geschaltete Wandleranordnung (240, 440) nach einem der Ansprüche 9 bis 11, wobei die erste und die zweite Wechselstromspannung mit einer Wechselstromnetzspannung (82) wirksam angeschlossen sind, wobei die parallel geschaltete Wandleranordnung (240, 440) weiter eine Transformatoranordnung (250, 350, 450) aufweist, die konfiguriert ist, um die Wechselstromnetzspannung (82) an eine oder beiden von erster und zweiter Wechselspannung anzuschließen, und wobei die Transformatoranordnung (250, 350, 450) konfiguriert ist, so dass die erste und zweite Wechselspannung phasenverschoben relativ zueinander sind.

13. Parallel geschaltete Wandleranordnung (240, 440) nach einem der Ansprüche 9 bis 12, wobei die Transformatoranordnung (250, 350, 450) konfiguriert ist in:
einer ersten Anordnung, bei der eine Primärwindung der Transformatoranordnung (250) an die Wechselstromnetzspannung (82) angeschlossen ist, wobei eine sterngeschaltete Sekundärwindung der Transformatoranordnung (250) an eine von erster und zweiter Wechselstromspannung angeschlossen ist und eine deltageschaltete Sekundärwindung der Transformatoranordnung (250) an die andere von erster und zweiter Wechselstromspannung angeschlossen ist;
einer zweiten Anordnung, in der ein Autotransformator (110) der Transformatoranordnung (350) konfiguriert ist, um die Wechselstromnetzspannung (82) sowohl an die erste als auch an die zweite Wechselspannung anzuschließen, und der Autotransformator (110) konfiguriert ist, so dass die erste und zweite Wechselstromspannung zueinander phasenverschoben sind; oder
einer dritten Anordnung, in der die Transformatoranordnung (450) konfiguriert ist, um die Wechselstromnetzspannung (82) nur mit einer von erster und zweiter Wechselstromspannung anzuschließen, wobei eine Primärwindung der Transformatoranordnung (450) an die Wechselstromnetzspannung (82) angeschlossen ist, eine Sekundärwindung der Transformatorschaltung (450) an eine von erster und zweiter Wechselstromspannung angeschlossen ist und die andere von erster und zweiter Wechselstromspannung direkt an die Wechselstromnetzspannung (82) angeschlossen ist.

14. Parallel geschaltete Wandleranordnung (40, 140, 240, 440) nach einem der Ansprüche 9 bis 13, wobei die Steuerung (74) programmiert ist, um jeden Wandler (42, 44) zu betreiben, so dass eine Stromkomponente der 5. Oberwelle und/oder eine Stromkomponente der 7. Oberwelle auf einer Wechselstromseite jedes Wandlers (42, 44) erzeugt wird, wenn die erste und zweite Wechselstromspannung phasenverschoben zueinander sind.

15. Parallel geschaltete Wandleranordnung (40, 140, 240, 440) nach einem der vorstehenden Ansprüche, wobei die Steuerung (74) programmiert ist, um die Schenkelabschnitte jedes Wandlers (42, 44) zu betreiben, um selektiv eine oder mehrere Nullphasen-Dreiphasensequenz-Oberwellenkomponente in eine Wechselspannungswellenform auf einer Wechselstromseite jedes Wandlers (42, 44) einzuspritzen.

## Revendications

1. Ensemble de convertisseurs connectés en parallèle (40) comprenant :
un premier et un second convertisseur (42, 44), chaque convertisseur (42, 44) comprenant une première et une seconde borne CC (52, 54), chaque convertisseur (42, 44) comprenant au moins une branche de convertisseur (56) s'étendant entre les bornes CC correspondantes (52, 54), chaque branche de convertisseur (56) comprenant une première et une seconde partie de branche séparées par une borne CA (58), chaque borne CA (58) pouvant être connectée en service à une tension CA (82), chaque partie de branche comportant au moins un commutateur de direction (60) connecté entre la borne CA (58) et l'une respective des première et seconde bornes CC (52, 54), les commutateurs de direction (60) des première et seconde parties de branche étant à même de commuter les parties de branche respectives en circuit et hors circuit entre la borne CC respective (52, 54) et la borne CA (58) ;
un premier et un second support de transmission CC (46, 48) comprenant respectivement une première et une second borne de réseau CC (78, 80) qui peuvent être connectées en service à un réseau CC, le premier support de transmission CC (78) interconnectant les premières bornes CC (52) de convertisseurs (42, 44), le second support de transmission CC(80) interconnectant les secondes bornes CC (54) des convertisseurs (42, 44) ; et
un dispositif de commande (74) programme pour commander sélectivement la commutation des commutateurs de direction (60) de chaque branche de convertisseur pour commuter les deux parties de branche correspondantes en circuit simultanément afin de former un trajet de conduction de courant dans le convertisseur correspondant (42, 44), le trajet de conduction de courant respectif étant configuré pour acheminer un courant à présenter aux bornes (52, 54) du réseau CC, dans lequel le dispositif de commande (74) est en outre programmé pour commander sélectivement la commutation des commutateurs de direction (60) de sorte que, dans un cycle opératoire de l'ensemble de convertisseurs connectés en parallèle (40), l'ensemble de convertisseurs connectés en parallèle (40) se commute entre :
(i) un premier mode dans lequel le trajet de conduction de courant respectif (84) est formé dans le premier convertisseur (42) et le trajet de conduction de courant respectif (84) n'est pas formé dans le second convertisseur (44) ; et
(ii) un deuxième mode dans lequel le trajet de conduction de courant respectif (84) est formé dans le second convertisseur (44) et le trajet de conduction de courant respectif (84) n'est pas formé dans le premier convertisseur (42) ;
**caractérisé en ce que** les bornes CA (58) des convertisseurs (42, 44) sont connectées à la même tension CA et le dispositif de commande (74) est en outre programmé pour commander sélectivement la commutation des commutateurs de direction (60) de sorte que la période (90) pendant laquelle le trajet de conduction de courant respectif (84) est formé dans le premier convertisseur (42) soit asymétrique ou sensiblement asymétrique autour d'un passage par zéro de la première tension CA et de sorte que la période (92) pendant laquelle le trajet de conduction de courant respectif (84) est formé dans le second convertisseur (44) soit asymétrique ou sensiblement asymétrique autour d'un passage par zéro de la seconde tension CA.

2. Ensemble de convertisseurs connectés en parallèle (40, 140, 240, 440) selon la revendication 1 dans lequel le trajet de conduction de courant respectif (84) est configuré pour acheminer un courant alternatif pour le présenter aux bornes du réseau CC.

3. Ensemble de convertisseurs connectés en parallèle (40, 140, 240, 440) selon la revendication 1 ou la revendication 2 dans lequel le premier et le second convertisseur (42, 44) sont des premier et second convertisseurs à bras alternés respectivement, chaque partie de branche comprenant le ou chaque commutateur de direction (60) connecté en série avec un convertisseur chainé (62) entre la borne CA (58) et l'une respective des première et seconde bornes CC (52, 54), les convertisseurs chaînés (62) de chaque branche de convertisseur (56) étant à même de générer une forme d'onde de tension CA sur la borne CA correspondante (58), les commutateurs de direction (60) des première et seconde parties de branche étant à même de commuter les convertisseurs chaînés respectifs (62) en circuit et hors circuit entre la borne CC respective (52, 54) et la borne CA (58).

4. Ensemble de convertisseurs connectés en parallèle (40, 140, 240, 440) selon l'une quelconque des revendications précédentes dans lequel le dispositif de commande (74) est en outre programmé pour commander sélectivement la commutation des commutateurs de direction (60) de sorte que l'ensemble de convertisseurs connectés en parallèle (40, 140, 240, 440) alterne entre le premier et le deuxième mode du cycle opératoire de l'ensemble de convertisseurs connectés en parallèle (40, 140, 240, 440).

5. Ensemble de convertisseurs connectés en parallèle (40, 140, 240, 440) selon l'une quelconque des revendications précédentes dans lequel le dispositif de commande (74) est en outre programmé pour commander sélectivement la commutation des commutateurs de direction (60) de sorte que l'ensemble de convertisseurs connectés en parallèle (40, 140, 240, 440) soit dans l'un ou l'autre du premier et du deuxième mode à tout moment donné du cycle opératoire de l'ensemble de convertisseurs connectés en parallèle (40, 140, 240, 440).

6. Ensemble de convertisseurs connectés en parallèle (40, 140, 240, 440) selon l'une quelconque des revendications précédentes dans lequel le dispositif de commande (74) est en outre programmé pour commander sélectivement la commutation des commutateurs de direction (60) de sorte que l'ensemble de convertisseurs connectés en parallèle (40, 140, 240, 440) se trouve dans un troisième mode dans lequel les trajets de conduction de courant respectifs (84) sont respectivement formés dans le premier et le second convertisseur (42, 44) au cours d'une période de transition (76) entre le premier et le deuxième mode.

7. Ensemble de convertisseurs connectés en parallèle (40, 140, 240, 440) selon l'une quelconque des revendications précédentes dans lequel, lorsque l'un et/ou l'autre des convertisseurs (42, 44) comprend ou comprennent une pluralité de branches de convertisseur (56), le dispositif de commande (74) est en outre programmé pour commander sélectivement la commutation des commutateurs de direction (60) de chacune de la pluralité de branches de convertisseur (56) pour commuter les deux parties de branche correspondantes en circuit simultanément afin de forme un trajet de conduction de courant respectif (84) dans le convertisseur correspondant (42, 44) et le dispositif de commande (74) est en outre programmé pour commander sélectivement la commutation des commutateurs de direction (60) de la pluralité de branches de convertisseur (56) pour former les trajets de conduction de courant respectifs (84) à différents moments respectifs du cycle opératoire de l'ensemble de convertisseurs connectés en parallèle (40, 140, 240, 440).

8. Ensemble de convertisseurs connectés en parallèle (140) selon l'une quelconque des revendications précédentes, comprenant en outre au moins un réacteur (102) connecté dans les supports de transmission CC (46, 48) entre les convertisseurs (42, 44).

9. Ensemble de convertisseurs connectés en parallèle (240, 440) selon l'une quelconque des revendications précédentes dans lequel la ou chaque borne CA (58) du premier convertisseur (42) est connectée à une première tension CA, la ou chaque borne CA (58) du second convertisseur (44) est connectée à une seconde tension CA et la première et la seconde tension CA sont configurées pour être décalées en phase l'une par rapport à l'autre.

10. Ensemble de convertisseurs connectés en parallèle (240, 440) selon la revendication 9 dans lequel les première et seconde tensions CA sont configurées pour être décalées en phase l'une par rapport à l'autre de sorte que la période pendant laquelle le trajet de conduction de courant respectif (84) est formé dans le premier convertisseur (42) soit symétrique ou sensiblement symétrique autour d'un passage par zéro de la première tension CA et de sorte que la période pendant laquelle le trajet de conduction de courant respectif (84) est formé dans le second convertisseur (44) soit symétrique ou sensiblement asymétrique autour d'un passage par zéro de la seconde tension CA.

11. Ensemble de convertisseurs connectés en parallèle (240, 440) selon la revendication 9 ou la revendication 10 dans lequel la première et la seconde tension CA sont configurées pour être décalées en phase l'une par rapport à l'autre de sorte que, en service, une composante de courant harmonique (106) apparaissant du côté CC du premier convertisseur (420) soit en antiphase avec une composante de courant harmonique (108) apparaissant d'un côté CC du second convertisseur (44) de sorte que les composantes de courant harmoniques (106, 108) s'annulent l'une l'autre sur les bornes (78, 80) du réseau CC.

12. Ensemble de convertisseurs connectés en parallèle (240, 440) selon l'une quelconque des revendications 9 à 11 dans lequel la première et la seconde tension CA sont liées en service à une tension de réseau CA (82), l'ensemble de convertisseurs connectés en parallèle (240, 440) comprend en outre un ensemble de transformateurs (250, 350, 450) configuré pour connecter la tension (82) du réseau CA à l'une et/ou l'autre de la première et de la seconde tension CA et l'ensemble de transformateurs (250, 350, 450) est configuré de sorte que la première et la seconde tension CA soient décalées en phase l'une par rapport à l'autre.

13. Ensemble de convertisseurs connectés en parallèle (240, 440) selon l'une quelconque des revendications 9 à 12, dans lequel l'ensemble de transformateurs (250, 350, 450) est configuré dans :
un premier agencement dans lequel un enroulement primaire de l'ensemble de transformateurs (250) est connecté à la tension (82) du réseau CA, un enroulement secondaire connecté en étoile de l'ensemble de transformateurs (250) est connecté à l'une de la première et de la seconde tension CA et un enroulement secondaire connecté en delta de l'ensemble de transformateurs (250) est connecté à l'autre des première et seconde tensions CA ;
un deuxième agencement dans lequel un autotransformateur (110) de l'ensemble de transformateurs (350) est configuré pour connecter la tension (82) du réseau CA aux deux première et seconde tensions CA et l'autotransformateur (110) est configuré de sorte que les première et seconde tension CA soient décalées en phase l'une par rapport à l'autre ; ou
un troisième agencement dans lequel l'ensemble de transformateurs (450) est configuré pour connecter la tension (82) du réseau CA à seulement l'une de la première et de la seconde tension CA, un enroulement primaire de l'ensemble de transformateurs (450) est connecté à la tension (82) du réseau CA, un enroulement secondaire de l'ensemble de transformateurs (450) est connecté à l'une de la première et de la seconde tension CA et l'autre de la première et de la seconde tension CA est directement connectée à la tension (82) du réseau CA.

14. Ensemble de convertisseurs connectés en parallèle (40, 140, 240, 440) selon l'une quelconque des revendications 9 à 13, dans lequel le dispositif de commande (74) est programmé pour faire fonctionner chaque convertisseur (42, 44) de manière à générer une 5^{e} composante de courant harmonique et/ou une 7^{e} composante de courant harmonique d'un côté CA de chaque convertisseur (42, 44) lorsque la première et la seconde tension CA sont décalées en phase l'une par rapport à l'autre.

15. Ensemble de convertisseurs connectés en parallèle (40, 140, 240, 440) selon l'une quelconque des revendications précédentes, dans lequel le dispositif de commande (74) est programmé pour faire fonctionner les parties de branche de chaque convertisseur (42, 44) afin d'injecter sélectivement une ou plusieurs composantes triples de la séquence de phase zéro dans une forme d'onde de tension CA d'un côté CA de chaque convertisseur (42, 44).
